Europäisches Patentamt

European Patent Office

Office européen des brevets

(19)

(11) Publication number : **0 581 584 A1**

(12) # EUROPEAN PATENT APPLICATION

(21) Application number : **93305959.4**

(22) Date of filing : **28.07.93**

(51) Int. Cl.⁵ : **G02B 1/10**

(30) Priority : **29.07.92 JP 202725/92**

(43) Date of publication of application :
**02.02.94 Bulletin 94/05**

(84) Designated Contracting States :
**DE FR GB**

(71) Applicant : **NIKON CORPORATION**
**2-3, Marunouchi 3-chome Chiyoda-ku**
**Tokyo (JP)**

(72) Inventor : **Abe, Jun**
**10-10-113, Minami Ohsawa 4-chome**
**Hachioji-shi, Tokyo (JP)**
Inventor : **Suzuki, Tetsuo**
**Daini Kowaryo, 46-1, Tana-machi, Midori-ku**
**Yokohama-shi, Kanagawa-ken (JP)**

(74) Representative : **Burke, Steven David et al**
**R.G.C. Jenkins & Co. 26 Caxton Street**
**London SW1H 0RJ (GB)**

(54) **Antireflective plastic optical element and method for producing the same.**

(57)   An optical element comprises a substrate consisting of a plastic optical element, an oxide film containing at least Pr and Al, formed directly on the substrate, and an inorganic antireflective film formed on the oxide film. Preferably the substrate and the oxide film have refractive indexes within a range of 1.6 to 1.7. The oxide film is preferably formed by reactive vapor deposition conducted under the introduction of oxygen, or by ion assisted deposition employing oxygen ions.

# FIG. 1

## BACKGROUND OF THE INVENTION

### Field of the Invention

The present invention relates to an antireflective film for use on a plastic optical element and a method for producing the same, and, more specifically to an antireflective film of high quality and a high impact strength without formation of interference fringes, adapted for use on a spectacle lens, a camera, binoculars or the like or in optical communication or optical information processing, and a method for producing the same.

### Related Background Art

In various optical elements such as spectacle lens, the surface has conventionally been coated with an antireflective film in order to reduce the reflection on said surface. In case of a plastic lens, the antireflective film is coated by vacuum evaporation, usually after the deposition of an organic hard coating, in order to improve the mechanical properties. Also it is recently tried to avoid the deterioration in the spectral characteristics, resulting from the interference fringes caused by the formation of said hard coating, by bringing the refractive index thereof close to that of the plastic lens. However, the materials usable for such hard coating having a high refractive index close to that of the plastic lens are limited, and formation of such hard coating often reduces the impact strength.

In the conventional technology, as explained above, formation of interference fringes is unavoidable due to the difference in refractive index between the hard coating and the plastic lens or due to the thickness of such hard coating, thus significantly deteriorating the optical (spectral) characteristics and aesthetic features for example in the spectacle lenses. Also there is encountered a drawback of deterioration of the impact strength by such hard coating. Furthermore, with the increase in the refractive index of the material constituting the plastic lens, it has become increasingly important to provide, in a simple manner, a coating layer for antireflection matching such high refractive index and for improving the mechanical characteristics such as impact resistance.

## SUMMARY OF THE INVENTION

In consideration of the foregoing, the object of the present invention is to provide an antireflective plastic optical element, such as a spectacle lens, of high quality, having a novel surface coating structure capable of suppressing formation of the interference fringes, and improving the mechanical characteristics such as impact resistance, thereby resolving the drawbacks of the prior technology, and also to provide a method for producing such optical element.

The above-mentioned object can be attained, according to the present invention, by an antireflective optical element comprising a plastic optical element body, an oxide film formed directly thereon and containing at least Pr and Al, and an inorganic antireflective film formed thereon.

Also the present invention provides a method for producing such antireflective optical element comprising steps of forming a hardened layer consisting of said oxide layer by vacuum evaporation on the surface of the plastic optical element body, and further forming thereon a single-or or multi-layered inorganic antireflective film by vacuum evaporation.

The plastic optical element body, serving as a substrate, is not particularly limited in the specy thereof, and various materials including those already known in the art, such as urethane, acrylic and polycarbonate resins may be used for this purpose. The refractive index of such substrate can also be selected arbitrarily, but a material with a high refractive index within a range of about 1.6 to 1.7 can be suggested as a preferred example.

The oxide film containing Pr and Al, to be formed directly on the substrate surface, at least contains Pr and Al in oxide state, but their bonding state or complex state is not critical. Pr and Al may be present, for example, as $Pr_2O_3$, $Al_2O_3$, their complex oxides, or lower oxides of Pr and Al. Also other elements than Pr, Al and oxygen may be present, including those unavoidable as impurity, unless the effects of the present invention are not undesirably affected.

Furthermore, the refractive index of said oxide film can be selected arbitrarily, and may be made substantially same as that of said substrate in a preferred embodiment. Said refractive index can be suitably varied by the oxidized state of said oxides, or, more specifically, by the control of the oxygen pressure in the vacuum evaporation.

In the method of the present invention, the hardened layer of the oxide film containing Pr and Al can be formed by reactive vapor deposition employing oxygen or ion assisted deposition utilizing oxygen ions.

According to the present invention, an oxide film containing at least Pr and Al is formed as a first layer, by means of a film forming technology such as reactive vapor deposition or ion assisted deposition, directly on the surface of a plastic optical element, and a single- or multi-layered antireflective film is formed by vacuum evaporation on said first layer. Consequently the entire process can be achieved by vacuum evaporation, without requiring cumbersome plural surface processing steps as in the conventional organic hard coating method, and the manpower saving can therefore be achieved in the manufacturing process. Also the process time can be significantly shortened, since the prolonged thermal hardening step, required in the conventional hard coating, can be dispensed with. Furthermore, the multi-layered antireflective film formed according to this invention is free from ripples in every wavelength, and is excellent in the spectral reflectance characteristics, and the oxide film containing Pr and Al, constituting the first layer of the present invention, shows superior impact resistance in comparison with the conventional hard coating.

BRIEF DESCRIPTION OF THE DRAWINGS

Fig. 1 is a view showing the structure of an antireflective optical element of the present invention;
Fig. 2 is a chart showing the spectral reflectance of multi-layered antireflective films of an embodiment of the present invention and of a reference example; and
Fig. 3 is a chart showing the relation between the refractive index and the oxygen gas pressure at the vacuum evaporation in an embodiment of the present invention.

DETAILED DESCRIPTION OF THE PREFERRED EMBODIMENTS

Now the present invention will be clarified in detail by preferred embodiments, with reference to the attached drawings.

[Embodiment 1]

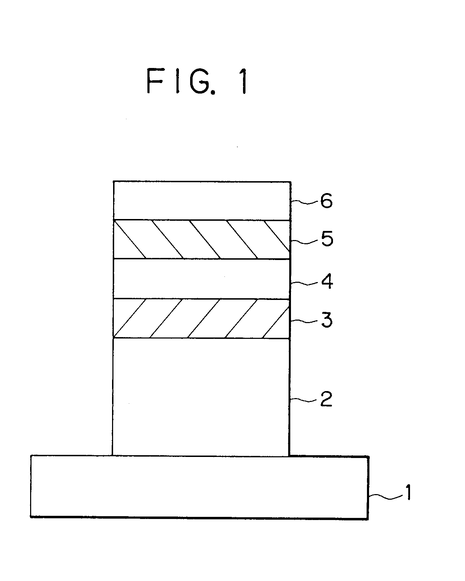

Fig. 1 shows the structure when a hardened layer consisting of an inorganic compound film, and a multi-layered antireflective film are formed according to the present invention. A plastic lens (1) of urethane resin is washed and set in a vacuum evaporation apparatus. The vacuum chamber of said apparatus is evacuated to $1 \times 10^{-5}$ Torr, then oxygen gas is introduced into said vacuum chamber to a pressure of $1 \times 10^{-4}$ Torr, and a compound of $Pr_2O_3$ and $Al_2O_3$ is evaporated by an electron beam evaporation source to form, on the plastic lens (1), a hardened layer (2) consisting of a first oxide film of a thickness of $1.75\lambda$ ($\lambda = 510$ nm). Then a multi-layered antireflective film is obtained thereon by forming a 2nd layer (3) of $Al_2O_3$ with a thickness of $0.25\lambda$ ($\lambda = 510$ nm), a 3rd layer (4) of $ZrO_2$ with a thickness of $0.25\lambda$ ($\lambda = 510$ nm), a 4th layer (5) of $TiO_2$ with a thickness of $0.25\lambda$ ($\lambda = 510$ nm), and a 5th layer (6) of $SiO_2$ with a thickness of $0.25\lambda$ ($\lambda = 510$ nm).

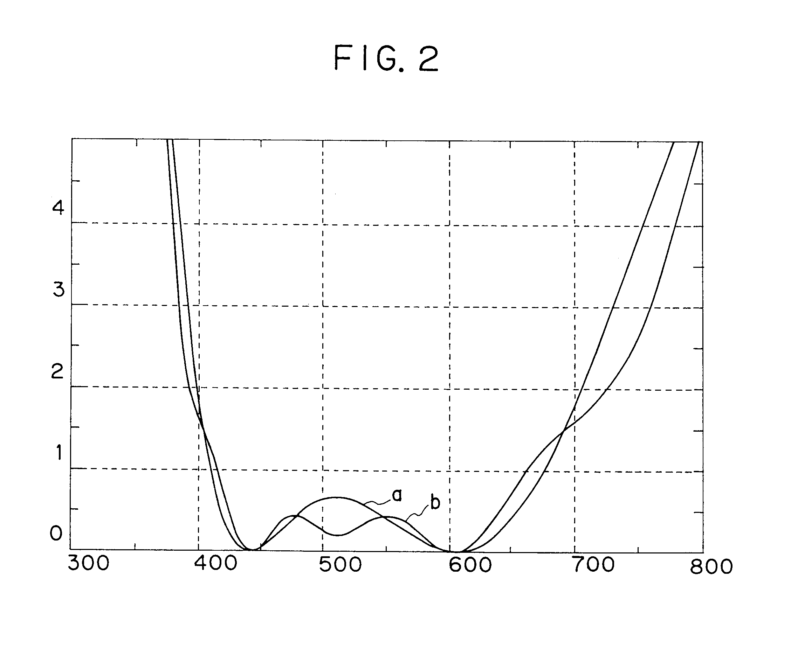

The spectral reflectance of the antireflective film in the above-explained embodiment is shown by a curve a in Fig. 2, wherein the abscissa indicates the wavelength and the ordinate indicates the reflectance.

Also as a reference example, the urethane resin lens (1) shown in Fig. 1 was given a first hardened layer (2) consisting of organic hard coating, and was charged in said vacuum chamber, which was evacuated as in the foregoing embodiment and was charged with oxygen gas to a pressure of $1 \times 10^{-4}$ Torr. Thereafter a multi-layered antireflective film was obtained by forming a 2nd layer (3) to a 5th layer (6) in the same manner as in the foregoing embodiment. The spectral reflectance of thus obtained antireflective film is shown by a curve b in Fig. 2.

As will be apparent from Fig. 2, the curve b representing the reference example shows ripples depending on the wavelength, while the curve a representing the embodiment of the present invention is free from such ripples.

Also Tables 1 and 2 show the optical thicknesses thicknesses of the constituent films and the refractive indexes thereof, respectively in the embodiment of the present invention and in the reference example. It will be understood that the oxide film of the present invention consisting of $Pr_2O_3$ and $Al_2O_3$ has a sufficiently high refractive index comparable to that of the plastic optical element, and is therefore superior to the conventional organic hard coating.

Table 1

| | nd ($\lambda$ = 510 nm) | nd |
|---|---|---|
| $Pr_2O_3/Al_2O_3$ | 1.750 $\lambda$ | 1.660 |
| $Al_2O_3$ | 0.250 $\lambda$ | 1.620 |
| $ZrO_2$ | 0.250 $\lambda$ | 1.995 |
| $TiO_2$ | 0.250 $\lambda$ | 2.150 |
| $SiO_2$ | 0.250 $\lambda$ | 1.471 |

Table 2

| | nd ($\lambda$ = 510 nm) | nd |
|---|---|---|
| Hard coating | 1.750 $\lambda$ | 1.600 |
| $Al_2O_3$ | 0.250 $\lambda$ | 1.620 |
| $ZrO_2$ | 0.250 $\lambda$ | 1.995 |
| $TiO_2$ | 0.250 $\lambda$ | 2.150 |
| $SiO_2$ | 0.250 $\lambda$ | 1.471 |

Then three samples each of the above-explained embodiment and the reference example were subjected to an impact resistance test (steel ball dropping test), according to the standards of FDA, U.S. As will be apparent from the results shown in Table 3, the samples of the embodiment of the present invention were not broken by the steel ball, while all the samples of the reference example were penetrated and destructed by the steel ball.

Table 3 also shows the results of an adhesion test, conducted with an adhesive tape.

Table 3

| Test No. | | Destruction (crack/petration) | Adhesion (tape test) | Central thickness of lens (mm) |
|---|---|---|---|---|
| Embodiment 1 | sample 1 | No crack/penetration | No peeling | 0.80 |
| | sample 2 | No crack/penetration | No peeling | 0.88 |
| | sample 3 | No crack/penetration | No peeling | 0.89 |
| Reference Example | sample 1 | Penetrated | No peeling | 0.80 |
| | sample 2 | Penetrated | No peeling | 0.87 |
| | sample 3 | Penetrated | No peeling | 0.88 |

[Embodiment 2]

In the configuration on the urethane resin lens (1) shown in Fig. 1, the first hardened layer (2) (consisting of $Pr_2O_3$ and $Al_2O_3$) alone was formed by ion assisted deposition, under an oxygen pressure of 1 x $10^{-4}$ Torr. The conditions of the ion assisted deposition are shown in Table 4. On thus formed first hardened layer (2), there were formed a second Al$_2$O$_3$ layer (3) and subsequent layers by electron beam evaporation under the same conditions as in the first embodiment, thereby obtaining a multi-layered antireflective film.

Table 4

| Test No. | Beam voltage (V) | Beam current (mA) | Ion current density (uA/cm$^2$) |
|---|---|---|---|
| Embodiment 3 sample 1 | 200 | 20 | 10 |
| sample 2 | 500 | 40 | 48 |
| sample 3 | 1000 | 50 | 26 |

Each of the samples were evaluated, as in the embodiment 1, by an impact resistance test and an adhesion test. As will be apparent from the results shown in Table 5, no samples were destructed by penetration of the steel ball.

Table 5

| Test No. | | Destruction (crack/penetration) | Adhesion (tape test) | Central thickness of lens (mm) |
|---|---|---|---|---|
| Embodiment 3 | sample 1 | No crack/penetration | No peeling | 0.80 |
| | sample 2 | No crack/penetration | No peeling | 0.86 |
| | sampel 3 | No crack/penetration | No peeling | 0.88 |

Film formation by ion assisted deposition as in the embodiment 2 is known to generally improve the adhesion of the film to the substrate. On the other hand, the adhesion and the impact resistance are generally incompatible, so that the impact resistance tends to be deteriorated when the adhesion is improved. In the present invention, however, the impact resistance is not lowered when the adhesion is improved by ion assisted deposition.

[Embodiment 3]

In the formation of the oxide film containing Pr and Al, constituting the 1st layer in the embodiment 1, the oxygen gas pressure was varied to regulate the refractive index of said oxide film.

More specifically, the background pressure of the evaporation chamber of the vacuum evaporation apparatus was maintained at $1 \times 10^{-5}$ Torr, and there was selected an optical film thickness nd = $\lambda/4$. Also the power of the electron beam evaporation device was selected at an emission current of 300 mA and an accelerating voltage of 7 kV.

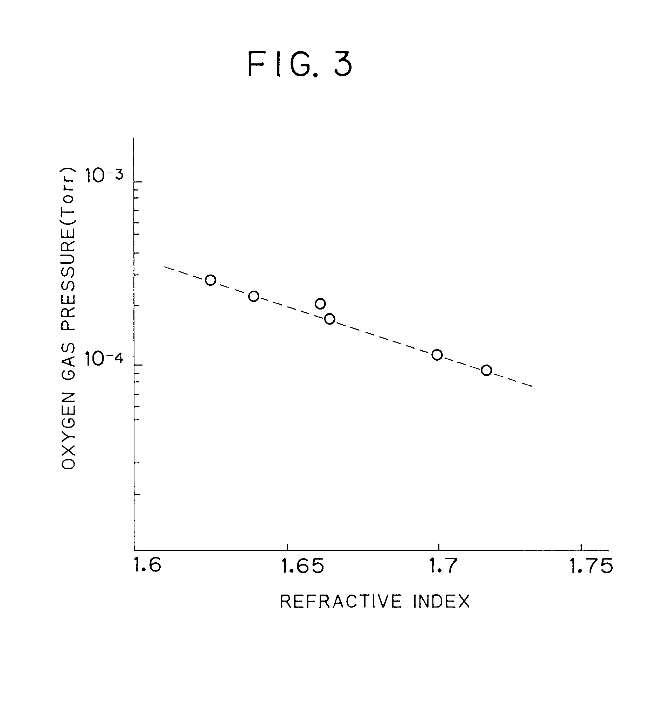

Fig. 3 shows the relationship between the refractive index and the oxygen gas pressure, and it will be understood that there stands a specific relationship therebetween. In fact the refractive index varies from 1.716 to 1.625 when the oxygen pressure was varied from $1 \times 10^{-4}$ to $2.5 \times 10^{-4}$ Torr. In these operations, the substrate was not heated in any case.

The plastic optical element of the present invention is produced by forming a first hardened layer consisting of an oxide film containing at least Pr and Al by vacuum evaporation, and then forming thereon a single- or multi-layered antireflective film by vacuum evaporation. Thus the process can be simplified as all the layers can be formed by surface processing in a vacuum evaporation chamber, and the productivity can be improved since the process time is significantly reduced. Also since the first layer formed on the surface of the plastic optical element constituting a substrate is a hardened layer composed of an oxide film, the multi-layered antireflective film of the present invention shows excellent spectral reflectance characteristics, is capable of suppressing the formation of interference fringes and exhibiting an excellent impact resistance, thereby providing an antireflective plastic optical element advantageous in practical use.

## Claims

1. An antireflective plastic optical element comprising:
   a substrate composed of a plastic optical element;
   an oxide film containing at least Pr and Al, formed directly on said substrate; and
   an inorganic antireflective film formed on said oxide film.

2. An antireflective plastic optical element according to claim 1, wherein the refractive index of each of said substrate and said oxide film is within a range from 1.6 to 1.7.

3. An antireflective plastic optical element according to claim 1, wherein said oxide film is formed by reactive vacuum deposition conducted under the introduction of oxygen.

4. An antireflective plastic optical element according to claim 2, wherein said oxide film is formed by reactive vapor deposition conducted under the introduction of oxygen.

5. An antireflective plastic optical element according to claim 1, wherein said oxide film is formed by ion assisted deposition utilizing oxygen ions.

6. An antireflective plastic optical element according to claim 2, wherein said oxide film is formed by ion assisted deposition utilizing oxygen ions.

7. A method for producing a plastic optical element comprising steps of:
   providing a substrate composed of a plastic optical element;
   forming, by vacuum evaporation on said substrate, an oxide film containing at least Pr and Al; and
   forming an inorganic antireflective film by vacuum evaporation on said oxide film.

8. A method according to claim 7, wherein the vacuum evaporation for forming said oxide film is reactive vapor deposition conducted under the introduction of oxygen.

9. A method according to claim 7, wherein the vacuum evaporation for forming said oxide film is ion assisted deposition employing oxygen ions.

10. An antireflective optical element comprising, in sequence, a plastics optical element, an oxide film containing Pr and Al and an inorganic antireflective film.

FIG. 1

FIG. 2

# FIG. 3

**European Patent Office**

# EUROPEAN SEARCH REPORT

Application Number

EP 93 30 5959

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | CH-A-680 214 (BALZERS AG)<br><br>* page 3, line 21 - page 4, column 12 * | 1,5,7,9,10 | G02B1/10 |
| A | | 2,3,4,6,8 | |
| Y | PATENT ABSTRACTS OF JAPAN<br>vol. 12, no. 406 (P-777)27 October 1988<br>& JP-A-63 143 501 ( SHOWA DENKO ) 15 June 1988<br>* abstract * | 1,5,7,9,10 | |
| A | US-A-4 556 599 (SATO ET AL.)<br>* column 3, line 53 - column 4, line 15; claim 4 * | 1,7,10 | |
| A | PATENT ABSTRACTS OF JAPAN<br>vol. 15, no. 436 (C-882)7 November 1991<br>& JP-A-31 83 761 ( KONICA ) 9 August 1991<br>* abstract * | 1,3,4,7,8 | |
| A | US-A-4 161 560 (KIENEL)<br>* abstract * | 3,4,8 | TECHNICAL FIELDS SEARCHED (Int. Cl.5)<br><br>G02B |
| A | PATENT ABSTRACTS OF JAPAN<br>vol. 16, no. 224 (E-1206)25 May 1992<br>& JP-A-40 38 885 ( SUMITOMO METAL MINING )<br>10 February 1992<br>* abstract * | 5,6,9 | |

The present search report has been drawn up for all claims

| Place of search | Date of completion of the search | Examiner |
|---|---|---|
| BERLIN | 22 OCTOBER 1993 | VON MOERS F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)